# EUROPÄISCHE PATENTANMELDUNG

(11) **EP 4 112 303 A1**
(43) Veröffentlichungstag der Anmeldung: **04.01.2023**
(21) Anmeldenummer: 22170409.1
(22) Anmeldetag: 28.04.2022
(51) Int. Cl.: B32B 37/00, B32B 37/08, B32B 27/30, D06N 3/06

(54) **VERFAHREN FÜR DIE HERSTELLUNG EINES MEHRSCHICHTIGEN PVC-HALBZEUGS SOWIE EINE ENTSPRECHENDE VORRICHTUNG**

(30) Priorität: 07.06.2021 DE 102021114572
(71) Anmelder: OLBRICH GmbH, 46395 Bocholt (DE)
(72) Erfinder: HOLLSTEGGE, Matthias, 47546 Kalkar (DE); ROBELING, Dirk, 46395 Bocholt (DE); JOSTEN, Dr. Andre, 46399 Bocholt (DE); Welscher, Frans te, 46395 Bocholt (DE)
(74) Vertreter: Angerhausen, Christoph

(57) **Zusammenfassung**

Die Erfindung betrifft ein Verfahren für die Herstellung eines mehrschichtigen PVC-Halbzeugs (100), insbesondere eines mehrschichtigen PVC-Kunstleders oder einer mehrschichtigen PVC-Schaumfolie, wobei das Verfahren die Schritte aufweist:
a. Beschichten einer beschichteten oder unbeschichteten Trägerbahn (1) mit einem PVC-Plastisol (2,3), wobei eine mit einer ungelierten Plastisolschicht (4) beschichtete Trägerbahn (1) erhalten wird; danach
b. Gelieren der ungelierten Plastisolschicht (4), wobei eine mit einer gelierten Plastisolschicht (4) beschichtete Trägerbahn (1) erhalten wird; und danach
c. Abkühlen der mit der gelierten Plastisolschicht (4) beschichteten Trägerbahn (1);
dadurch gekennzeichnet, dass das Beschichten das gleichzeitige oder unmittelbar aufeinanderfolgende Beschichten der Trägerbahn (1) mit mindestens zwei PVC-Plastisolen (2,3) übereinander aufweist. Es wird weiterhin eine entsprechende Vorrichtung beschrieben.

## Beschreibung

Die Erfindung geht aus von einem Verfahren für die Herstellung eines mehrschichtigen PVC-Halbzeugs, insbesondere eines mehrschichtigen PVC-Kunstleders oder einer mehrschichtigen PVC-Schaumfolie, wobei das Verfahren das Beschichten einer beschichteten oder unbeschichteten Trägerbahn mit einem PVC-Plastisol aufweist, wobei eine mit einer ungelierten Plastisolschicht beschichtete Trägerbahn erhalten wird. Anschließend wird die ungelierte Plastisolschicht geliert, wobei eine mit einer gelierten Plastisolschicht beschichtete Trägerbahn erhalten wird. Im Anschluss daran wird die mit der gelierten Plastisolschicht beschichtete Trägerbahn abgekühlt, wobei die beschriebene Verfahrensschrittabfolge aus Beschichten, Gelieren und Abkühlen so oft und gegebenenfalls mit unterschiedlichen PVC-Plastisolen wiederholt werden kann, bis der angestrebte Schichtaufbau des mehrschichtigen PVC-Halbzeugs erreicht ist. Das Beschichten umfasst häufig ein Streichbeschichtungsverfahren, bei dem zwischen einer Rakel und dem Substrat ein Spalt eingehalten wird, welcher die Schichtdicke des aufgebrachten PVC-Plastisols bestimmt, während das Substrat mit dem darauf aufgebrachten Plastisol unter der Rakel hinweg gefördert wird. Ein derartiges Verfahren ist aus der DE 619128 A bekannt.

Die DE 10 2017 114 266 B9 beschreibt ein Verfahren zur Herstellung eines Wickelbandes, bei dem eine Trägerbahn mit einer UV-vernetzbaren Klebebeschichtung beschichtet wird, wobei die Klebebeschichtung über eine Düse einer Beschichtungsanlage auf den Träger aufgebracht wird.

Die WO 2020/055466 A1 beschreibt einen mehrkanaligen Druckkopf für die additive Fertigung.

Die unterschiedlichen Schichten des PVC-Halbzeugs sind jeweils dazu eingerichtet, dem Halbzeug eine bestimmte mechanische, optische, haptische oder noch anderweitige technische Funktion zu verleihen. Jede dieser PVC-Plastisolschichten muss jeweils mit der beschriebenen Verfahrensschrittabfolge aus Beschichten, Gelieren und Abkühlen auf der Trägerbahn ausgebildet werden. Insbesondere sind somit für die Ausbildung jeder der Schichten ein gesondertes Erhitzen und Abkühlen des gesamten bisherigen Materialaufbaus erforderlich. Weiterhin ist während des gesamten Herstellungsprozesses die Prozessluft zu steuern und gegebenenfalls nachzubehandeln. Die Herstellung mehrschichtiger PVC-Halbzeuge ist demgemäß äußerst Energieintensiv.

Es ist daher die Aufgabe der Erfindung, das eingangs beschriebene Verfahren derart weiterzuentwickeln, dass es einen geringeren Energieverbrauch aufweist und vorzugsweise die Anzahl der Prozessschritte, insbesondre der Aufheiz- und Abkühlschritte, reduziert wird.

Diese Aufgabe wird durch ein Verfahren mit dem Merkmal des Anspruchs 1 gelöst. Der nebengeordnete Anspruch 11 betrifft eine entsprechende Vorrichtung. Vorteilhafte Ausführungsformen der Erfindung sind jeweils Gegenstand der abhängigen Ansprüche.

Demgemäß ist vorgesehen, dass das Beschichten das gleichzeitige oder unmittelbar aufeinanderfolgende Beschichten der Trägerbahn mit mindestens zwei PVC-Plastisolen übereinander aufweist. Es wird somit eine sogenannten Nass-auf-Nass-Beschichtung mehrerer ungelierter Plastisole beschrieben, die bei dem nachfolgenden Gelieren gemeinsam geliert und bei dem nachfolgenden Abkühlen der daraus erzeugten, gelierten Plastisolschicht gemeinsam abgekühlt werden. Vorzugsweise werden genau zwei PVC-Plastisole gleichzeitig oder unmittelbar aufeinanderfolgend auf die Trägerbahn beschichtet, wobei die beiden PVC-Plastisole übereinander angeordnet auf die Trägerbahn aufgebracht werden, sodass ein erstes der beiden PVC-Plastisole im Kontakt mit der Trägerbahn oder einer darunterliegenden, beispielsweise zuvor aufgebrachten Beschichtung, beispielsweise einer Plastisolschicht, steht, während das darüber liegende, zweite PVC-Plastisol auf dem zuvor genannten, ersten PVC-Plastisol aufliegt.

Vorzugsweise weisen die PVC-Plastisole eine Viskosität auf, die ein Vermischen der beiden PVC-Plastisole verhindert oder auf ein zulässiges oder tolerierbares Minimum begrenzt. Demgemäß können im Vergleich zu der Ausbildung einzelner Plastisolschichten aus einzelnen zuvor aufgebrachten PVC-Plastisolen in einer einzigen Abfolge aus Beschichten, Legieren und Abkühlen mehrere gleichzeitig oder unmittelbar aufeinanderfolgend übereinander angeordnete PVC-Plastisole zu einer gelierten Plastisolschicht umgeformt werden, sodass die Anzahl der Aufheiz- und Abkühlzyklen des Produktes reduziert und damit Energie eingespart wird. Auch der prozesstechnisch erforderliche Abluftstrom wird reduziert.

Das gleichzeitige oder unmittelbar aufeinanderfolgende Beschichten der übereinander angeordneten PVC-Plastisole kann mithilfe einer Mehrschichtschlitzdüse erfolgen, die in der Richtung einer Relativbewegung der Trägerschicht in Bezug auf die Mehrschichtschlitzdüse hintereinander angeordnete Einzelschlitze aufweist, sodass ein im Wesentlichen zeitgleiches Aufbringen der beiden PVC-Plastisole auf der Trägerschicht erreicht werden kann.

Vorzugsweise werden sogenannte E-PVC-Plastisole verwendet, die durch Emulsionspolymerisation hergestellt sind. Diese zeichnen sich aufgrund ihrer Viskosität durch eine geringe Vermischung untereinander auf, wenn sie nach dem Beschichten als ungelierte Plastisole und noch vor dem Gelieren nass-auf-nass übereinander auf dem Trägersubstrat angeordnet sind.

Besonders vorteilhaft sind die beiden gleichzeitig oder unmittelbar aufeinanderfolgend beschichteten PVC-Plastisole hinsichtlich ihrer Viskosität derart aufeinander abgestimmt, dass sie sich nur unwesentlich miteinander mischen oder eine Mischung untereinander nur insofern zugelassen wird, dass die bevorzugten Materialeigenschaften des fertigen PVC-Halbzeugs nicht übermäßig nachteilig beeinflusst werden.

Die ungelierten Plastisolschichten können unmittelbar übereinander auf die Trägerbahn oder eine gelierte Plastisolschicht auf der Trägerbahn beschichtet werden.

Ebenso wie die beiden PVC-Plastisole gleichzeitig oder unmittelbar aufeinanderfolgend auf die Trägerbahn beschichtet werden, können die beschichteten PVC-Plastisole beziehungsweise die daraus gebildete, mehrlagige Plastisolschicht auch gleichzeitig geliert werden.

Die Schrittabfolge bestehend aus Beschichten einer beschichteten oder unbeschichteten Trägerbahn mit einem PVC-Plastisol, Gelieren der dabei gewonnenen, ungelierten Plastisolschicht und Abkühlen der dabei gewonnenen, gelierten Plastisolschicht kann mindestens einmal wiederholt werden. Dabei kann bei mindestens einer der Schrittabfolgen bei dem Beschichten der beschichteten oder unbeschichteten Trägerbahn die Trägerbahn mit den mindestens zwei PVC-Plastisolen gleichzeitig oder unmittelbar aufeinanderfolgend beschichtet werden. Insbesondere ist somit ein Verfahren denkbar, bei dem aus einer Vielzahl nacheinander geführter Schrittabfolgen bestehend aus Beschichten, Gelieren und Abkühlen lediglich eine Teilmenge dieser Schrittabfolgen durch das erfindungsgemäße Verfahren ersetzt werden, bei dem das Beschichten das gleichzeitige oder unmittelbare aufeinanderfolgende Beschichten der Trägerbahn mit mindestens zwei PVC-Plastisolen übereinander aufweist.

Demgemäß kann bei mindestens einer weiteren der Schrittabfolgen bestehend aus Beschichten, Gelieren und Abkühlen, das Beschichten der Trägerbahn lediglich mit genau einem PVC-Plastisol erfolgen, mithin die betreffende Schicht in der aus dem Stand der Technik bekannten Weise hergestellt werden.

Bei dem gleichzeitigen oder unmittelbar aufeinanderfolgenden Beschichten der Trägerbahn mit mindestens zwei PVC-Plastisolen können zwei PVC-Plastisole auf die Trägerbahn aufgebracht werden, die sich in mindestens einer Materialeigenschaft voneinander unterscheiden. Die beiden PVC-Plastisole können sich vorzugsweise in mindestens einer anderen Materialeigenschaft als ihrer Viskosität voneinander unterscheiden. Beispielsweise kann ein erstes der mindestens zwei PVC-Plastisole, das beim Gelieren schäumt, nass-auf-nass auf ein kompaktes PVC-Plastisol beschichtet werden, das keine Schäumung beim Gelieren erfährt. Demgemäß kann das erste PVC-Plastisol ein Treibmittel aufweisen, während das zweite PVC-Plastisol treibmittelfrei ist.

Insbesondere kann aber die Viskosität einer unteren der mindestens zwei übereinander geschichteten PVC-Plastisole größer als die Viskosität des darüber liegenden PVC-Plastisols sein.

Bei dem gleichzeitigen oder unmittelbar aufeinanderfolgenden Beschichten können die mindestens zwei PVC-Plastisole über je einen Einzelschlitz einer Mehrschichtschlitzdüse mit mehreren, fluidisch voneinander getrennten Einzelschlitzen auf die beschichtete oder unbeschichtete Trägerbahn aufgebracht werden.

Mindestens einer der Einzelschlitze kann von einer Pumpe mit dem zugeordneten PVC-Plastisol beaufschlagt werden. Vor dem Beschichten oder während des Beschichtens kann das Verfahren das Einstellen einer Schichtdicke mindestens eines der bei dem Beschichten auf der Trägerbahn aufgebrachten, PVC-Plastisols vorgesehen sein. Dazu kann eine Förderleistung der Pumpe, vorzugsweise eine Drehzahl der Pumpe, und/oder einer Vorschubgeschwindigkeit der Trägerbahn in Bezug auf die Mehrschichtschlitzdüse eingestellt werden.

Insbesondere kann eine Förderleistung der Pumpe in Abhängigkeit einer Vorschubgeschwindigkeit der Trägerbahn in Bezug auf die Mehrschichtschlitzdüse und/oder in Abhängigkeit einer Breite der Mehrschichtschlitzdüse senkrecht zur Vorschubrichtung der Trägerbahn eingestellt werden.

Gemäß einem anderen Aspekt wird eine Vorrichtung beschrieben, die dazu eingerichtet ist, das zuvor beschriebene Verfahren auszuführen. Die Vorrichtung kann insbesondere als eine Transferbeschichtungsanlage ausgebildet sein. Die Vorrichtung ist demgemäß für die Herstellung eines mehrschichtigen PVC-Halbzeugs, insbesondere eines mehrschichtigen PVC-Kunstleders oder einer mehrschichtigen PVC-Schaumfolie, eingerichtet. Dabei kann die Vorrichtung mindestens eine Beschichtungseinheit für das Beschichten einer beschichteten oder unbeschichteten Trägerbahn mit einem PVC-Plastisol, aufweisen. Die Vorrichtung kann weiterhin eine sich in einer Förderrichtung der Trägerbahn an die Beschichtungseinheit anschließende Geliereinheit für das Gelieren des PVC-Plastisols aufweisen. Weiterhin kann die Vorrichtung eine sich in der Förderrichtung der Trägerbahn an die Geliereinheit anschließende Abkühleinheit zum Abkühlen der mit dem PVC-Plastisol beschichteten Trägerbahn aufweist. Die Vorrichtung zeichnet sich dadurch aus, dass die Beschichtungseinheit für das gleichzeitige oder unmittelbar aufeinanderfolgende Beschichten der Trägerbahn mit mindestens zwei PVC-Plastisolen übereinander eingerichtet ist. Die Geliereinheit kann eine Temperiereinheit aufweisen, die dazu eingerichtet ist, die die PVC-Plastisole beispielsweise für wenige Minuten bei beispielsweise 160-200 °C zu tempern.

Die Vorrichtung kann für das gleichzeitige oder unmittelbar aufeinanderfolgende Beschichten der Trägerbahn mit mindestens zwei PVC-Plastisolen übereinander eine Mehrschichtschlitzdüse mit mindestens zwei fluidisch voneinander getrennten Einzelschlitzen aufweisen. Dabei kann mindestens einer der Einzelschlitze eine einstellbare Schlitzbreite aufweisen. Vorzugsweise sind die Schlitzbreiten beider Einzelschlitze unabhängig voneinander einstellbar.

Die Schlitzbreiten können beispielsweise zwischen 50 und 1000 µm, vorzugsweise zwischen 50 und 700 µm und besonders bevorzugt zwischen 200 und 500 µm betragen. Die Viskositäten der mindestens zwei PVC-Plastisole können zwischen 1 und 15 Pa·s vorzugsweise zwischen 2 und 8 Pa·s und besonders bevorzugt zwischen 3 und 7 Pa·s betragen. Weiterhin bevorzugt kann die Viskosität eines ersten der beiden PVC-Plastisole, das unterhalb eines zweiten der PVC-Plastisole angeordnet ist, größer als die Viskosität des zweiten PVC-Plastisols sein.

Weitere Einzelheiten der Erfindung werden in den nachstehenden Figuren erläutert. Dabei zeigt:
- Figur 1: in schematischer Darstellung ein Verfahren für die Herstellung eines mehrschichtigen PVC-Halbzeugs, wie es aus dem Stand der Technik bekannt ist;
- Figur 2: in schematischer Darstellung die Aufbringung eines Plastisols auf eine Trägerbahn im aus dem Stand der Technik bekannten Streichbeschichtungsverfahren;
- Figur 3: in schematischer Darstellung eine Querschnittsansicht einer mehrlagigen Plastisolschicht, die nach dem Verfahren gemäß Figur 2 ausgebildet worden ist;
- Figur 4: in schematischer Darstellung eine beispielhafte Ausführungsform der erfindungsgemäßen mehrlagigen Beschichtung einer Trägerbahn;
- Figur 5: in schematischer Darstellung eine weitere Ausführungsform einer erfindungsgemäßen mehrlagigen Beschichtungsvorrichtung; und
- Figur 6: in schematischer Darstellung eine Querschnittsansicht einer mehrlagigen Plastisolschicht, die unter Verwendung der Vorrichtung gemäß Figur 5 ausgebildet worden ist.

Mehrschichtige PVC-Plastisolprodukte, beispielsweise mehrschichtiges PVC-Kunstleder, bestehen aus mehreren Schichten, wovon jede Schicht einzeln als Plastisol auf die Trägerbahn oder auf eine zuvor auf die Trägerbahn aufgebrachte Beschichtung aufgebracht wird. Nach dem Beschichten wird die ungelierte Plastisolschicht durch thermische Behandlung zum Gel verändert und nach einer abschließenden Abkühlung kann eine folgende Schicht wieder mit dem gleichen Prozessablauf auf der Trägerbahn beziehungsweise der zuvor darauf aufgebrachten Plastisolschicht aufgebracht werden.

Erforderlich macht dies der Produktaufbau der PVC-Halbzeuge, beispielsweise im Falle von Kunstleder, bei dem jede Schicht eine unterschiedliche Aufgabe erfüllt. So gibt es beispielsweise eine Oberfläche, die eine besondere Optik und Oberflächenanmutung aufweisen soll, während weichere, darunterliegende Schichten, häufig Schaumschichten, in besonderer Weise die Flexibilität und die Dicke des Materials beeinflussen.

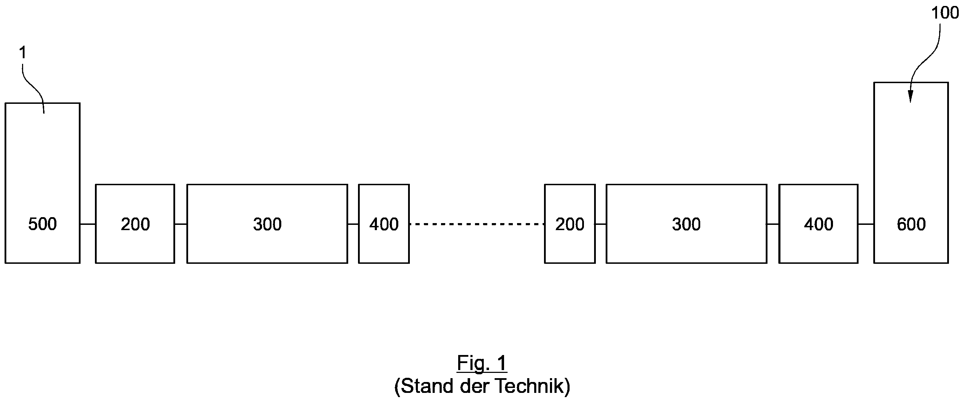

Die Figur 1 zeigt in schematischer Darstellung ein beispielhaftes Transferbeschichtungsverfahren für die Herstellung eines mehrschichtigen PVC-Halbzeugs 100 gemäß dem Stand der Technik. Neben einer Abrollung 500 für die Bereitstellung des Trägermaterials 1 sind eine der Anzahl der zu erzeugenden Plastisolschichten eines mehrschichtigen PVC-Halbzeugs 100 entsprechende Anzahl Prozessstufen vorgesehen, jeweils bestehend aus einer Beschichtungseinheit 200 für das Beschichten der Trägerbahn 1 mit einem PVC-Plastisol, einer sich daran anschließenden Geliereinheit 300 für das Gelieren des PVC-Plastisols und einer sich an die Geliereinheit anschließende Abkühleinheit 400 zum Abkühlen der mit dem gelierten PVC-Plastisol beschichteten Trägerbahn 1. Nachdem sämtliche der Prozessstufen bestehend aus Beschichtungseinheit 200, Geliereinheit 300 und Abkühleinheit 400 von dem Trägermaterial 1 durchlaufen sind, kann das beschichtete Trägermaterial 1 bzw. das daraus gebildete PVC-Halbzeug 100 aufgerollt und in einer Aufrollung 600 gespeichert werden.

Demgemäß ist es im Stand der Technik erforderlich, dass für jede herzustellende Schicht des mehrschichtigen PVC-Halbzeugs 100 die beschichtete oder gegebenenfalls noch unbeschichtete Trägerbahn 1 zunächst mit dem ungelierten Plastisol beschichtet wird, daraufhin die mit dem noch ungelierten Plastisol beschichtete Trägerbahn 1 erhitzt wird, um das Gelieren des Plastisols anzuregen, und im Anschluss daran die Trägerbahn mit dem gelierten Plastisol wieder abgekühlt wird, um das Beschichten der abgekühlten, gelierten Plastisolschicht mit einer nächsten, ungelierten Plastisolschicht zu ermöglichen. Das häufige Erhitzen und Wiederabkühlen des Halbzeugs 100 beziehungsweise des Vorläuferprodukts ist entsprechend energieaufwendig.

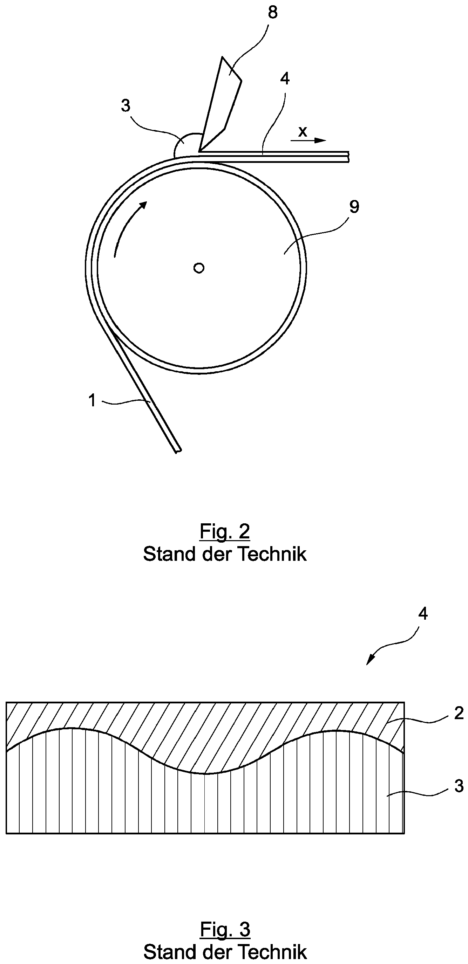

Die Figuren 2 und 3 zeigen ein Detail der Beschichtungseinheit 200 gemäß Figur 1 und eine dadurch gewonnene Plastisolschicht 4. Für das Beschichten wird die Trägerbahn 1 der Beschichtungseinheit 200 entlang eines Transportsystems in Vorschubrichtung x in reproduzierbarer Lage in Bezug auf eine Rakel 8 transportiert, wobei das Transportsystem beispielsweise eine Mehrzahl Walzen 9 aufweisen kann. In dem Beschichtungssystem 200 wird ein noch Plastisol 3 auf des Trägerbahn 1 dosiert und im Streichbeschichtungsverfahren von einer Rakel 8, die unter Einhaltung eines Spaltes zu der Oberseite der Trägerbahn 1 angeordnet ist, auf der Trägerbahn 1 zu einer ungelierten Plastisolschicht mit glatter Oberfläche umgeformt. In der zuvor in Bezug auf Figur 1 beschriebenen Weise kann die Trägerbahn 1 mit der darauf aufgebrachten Plastisolschicht 4 in einem folgenden Prozessschritt durch Erwärmen der Trägerbahn 1 mit der darauf aufgebrachten ungelierten Plastisolschicht behandelt werden, sodass die Plastisolschicht 4 geliert und nach einem Abkühlvorgang für das weitere Beschichten analog zu dem in Figur 2 gezeigten Verfahren bereitgestellt werden kann.

Die Figur 3 veranschaulicht einen weiteren Nachteil, des im Stand der Technik angewandten Streichbeschichtungsverfahrens, welcher darin besteht, dass Unebenheiten oder eine Textur an der Oberseite einer zuvor aufgebrachten Plastisolschicht, hier gebildet durch das PVC-Plastisol 3, durch die Verwendung der Glättrakel 8 bei der Aufbringung eines weiteren Plastisols 2 darauf eingeebnet werden, sodass das Streichbeschichtungsverfahren auch nicht dazu geeignet ist, haptische Eigenschaften über nachträglich aufgebrachte Plastisolschichten hinweg zu transportieren.

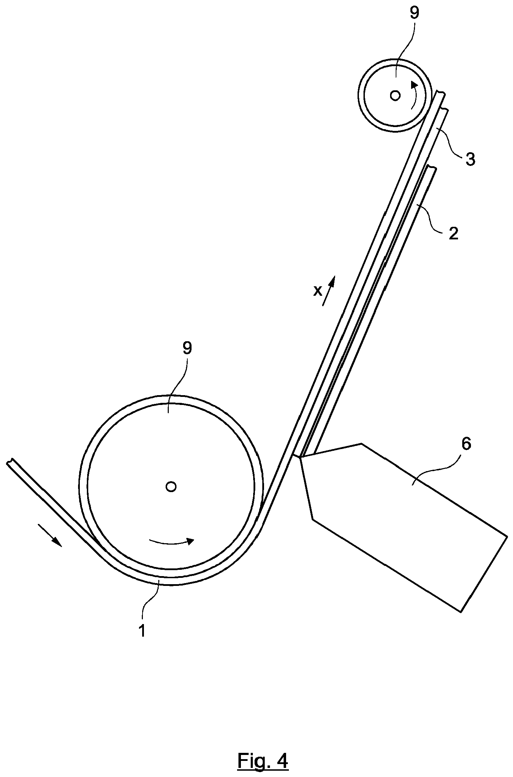

Die Figur 4 zeigt eine beispielhafte Ausführungsform für das erfindungsgemäße Beschichten einer unbeschichteten Trägerbahn 1 mit zwei PVC-Plastisolen 2, 3, die gleichzeitig mithilfe einer Mehrschichtschlitzdüse 6 auf der Trägerbahn 1 aufgebracht werden. Unter Anwendung des erfindungsgemäßen Verfahrens können mehrere oder sämtliche der Schichten eines mehrschichtigen PVC-Halbzeugs gleichzeitig und übereinanderliegend aufeinander beschichtet werden, sodass mindestens zwei thermische Zwischenschritte (Heizen und Kühlen) entfallen können.

Die Trägerbahn 1 wird dazu von mindestens zwei Walzen 9 etwa einer Transferbeschichtungsanlage gefördert. Die beiden Plastisolschichten 2, 3 werden in ihrem ungelierten Zustand unmittelbar aufeinander, das heißt nass-auf-nass, auf die Trägerbahn 1 aufgebracht. Insbesondere die bevorzugten E-PVC-Plastisole weisen von Haus aus eine Viskosität auf, welche sicherstellt, dass die beiden fließfähigen PVC-Plastisole 2, 3 nicht oder nur unerheblich miteinander mischen, sodass auch nach dem nachfolgenden Gelieren der Plastisole 2, 3 die daraus erzeugte, mehrschichtige Plastisolschicht 4 an ihren gegenüberliegenden Seiten die jeweilige funktionale Eigenschaft des betroffenen PVC-Plastisols 2, 3 aufweist und somit insbesondere keine Vermischung oder gar gegenseitiges Aufhebung von Materialeigenschaften hingenommen werden muss.

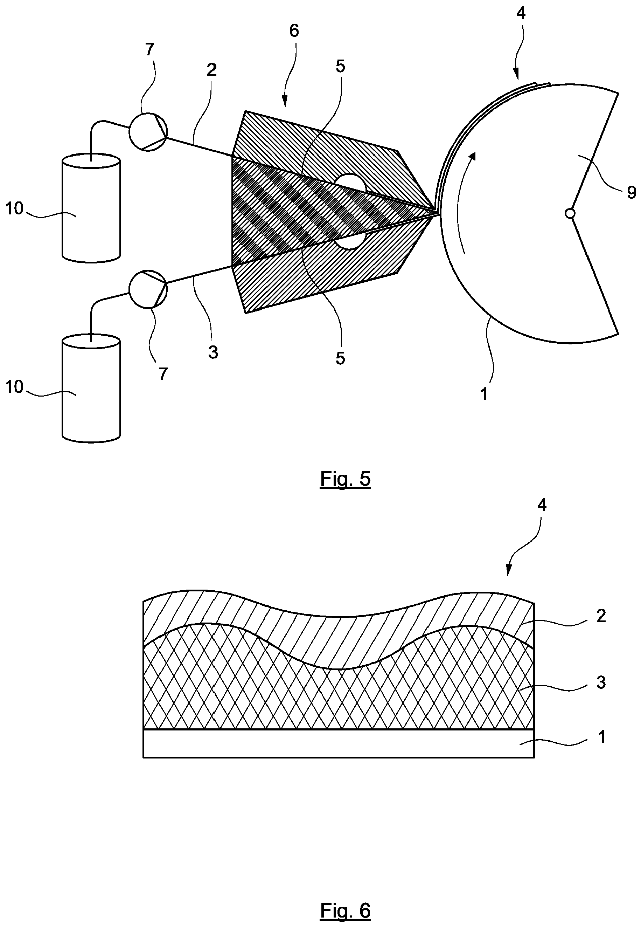

Die Figur 5 zeigt im Querschnitt senkrecht zur Längsrichtung der Einzelschlitze 5 eine beispielhafte Ausführungsform einer erfindungsgemäß anwendbaren Merhschichtschlitzdüse 6, welche mehrere fluidisch voneinander getrennte Einzelschlitze 5 aufweist, mithilfe welcher bei dem gleichzeitigen oder unmittelbar aufeinanderfolgenden Beschichten die mindestens zwei PVC-Plastisole 2,3 über jeweils einen der beiden Einzelschlitze 5 auf die Trägerbahn 1 aufgebracht werden.

Die Mehrschichtschlitzdüse 6 kann insbesondere kontaktfrei in Bezug auf die Materialbahn 1 beziehungsweise die Walze 9 und insbesondere auch in Bezug auf die auf der Walze 9 beziehungsweise der Materialbahn 1 abgelegten Plastisole 2, 3 angeordnet sein. Mithin kann ein Abstand der Mehrschichtschlitzdüse 6 in Bezug auf die Materialbahn 1 einschließlich etwaiger zuvor aufgebrachter Beschichtungen größer als die Summe der Einzeldicken der Plastisole 2, 3 im ungelierten Zustand sein. Demgemäß erfolgt durch die Mehrschichtschlitzdüse 5 auch keine mechanische Formgebung, insbesondre keine Glättung oder Einebnung der Oberseite des außenliegenden Plastisols 2, was einen weiteren wesentlichen Unterschied zu dem aus dem Stand der Technik bekannten Streichbeschichtungsverfahren darstellt.

Die Dosierung der Plastisole 2, 3 und damit die jeweilige Schichtdicke der Plastisole 2, 3 auf der Trägerbahn 1 kann durch die Steuerung einer Förderleistung der Pumpen 7 eingestellt werden, mithilfe welcher das jeweilige Plastisol 2,3 aus einem jeweils zugeordneten Plastisolvorrat 10 in einen jeweils zugeordneten Einzelschlitz 5 der Mehrschichtschlitzdüse 6 eingespeist wird. Ein weiterer Faktor für die sich einstellende Schichtdicke der Einzelschichten der Plastisolschicht 4 (vgl. Figur 6) ist die Rotationsgeschwindigkeit beziehungsweise die Umfangsgeschwindigkeit der Walzen 9. Es kann somit allein über die Steuerung des Volumenstroms der Plastisole 2, 3, welche die Einzelschlitze 5 der Merhschichtschlitzdüse 6 verlassen, und die Umfangsgeschwindigkeit der Walze 9 die Dicke der Schichten der Plastisole 2, 3 auf der Trägerbahn 1 bestimmt werden.

Die Figur 6 veranschaulicht, dass die von der Trägerbahn 1 abgewandte Außenseite der Plastisolschicht 4, welche von der Oberseite des äußeren PVC-Plastisols 2 gebildet wird, im Wesentlichen, wenn auch geringfügig abgeschwächt, die Geometrie des darunterliegenden PVC-Plastisols 3 übernimmt, sodass beispielsweise auch haptische Eigenschaften schichtübergreifend transportiert werden können.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Trägerbahn
- 2: erstes/oberes PVC-Plastisol
- 3: zweites/unteres PVC-Plastisol
- 4: Plastisolschicht, gebildet aus dem ersten/oberen PVC-Plastisol und dem zweiten/unteren PVC-Plastisol
- 5: Einzelschlitz
- 6: Mehrschichtschlitzdüse
- 7: Pumpe
- 8: Rakel
- 9: Walze
- 10: Plastisolvorrat
- 100: PVC-Halbzeug
- 200: Beschichtungseinheit
- 300: Geliereinheit
- 400: Abkühleinheit
- 500: Abrollung
- 600: Aufrollung
- x: Vorschubrichtung

## Patentansprüche

1. Verfahren für die Herstellung eines mehrschichtigen PVC-Halbzeugs (100), insbesondere eines mehrschichtigen PVC-Kunstleders oder einer mehrschichtigen PVC-Schaumfolie, wobei das Verfahren die Schritte aufweist:
a. Beschichten einer beschichteten oder unbeschichteten Trägerbahn (1) mit einem PVC-Plastisol (2, 3), wobei eine mit einer ungelierten Plastisolschicht (4) beschichtete Trägerbahn (1) erhalten wird; danach
b. Gelieren der ungelierten Plastisolschicht (4), wobei eine mit einer gelierten Plastisolschicht (4) beschichtete Trägerbahn (1) erhalten wird; und danach
c. Abkühlen der mit der gelierten Plastisolschicht (4) beschichteten Trägerbahn (1);
**dadurch gekennzeichnet, dass** das Beschichten das gleichzeitige oder unmittelbar aufeinanderfolgende Beschichten der Trägerbahn (1) mit mindestens zwei PVC-Plastisolen (2, 3) übereinander aufweist.

2. Verfahren nach Anspruch 1, bei dem die ungelierten Plastisolschichten (4) unmittelbar übereinander auf die Trägerbahn (1) oder eine gelierte Plastisolschicht auf der Trägerbahn (1) beschichtet werden.

3. Verfahren nach einem der vorangegangenen Ansprüche, bei dem bei dem Gelieren die mindestens zwei ungelierten Plastisolschichten (4) gleichzeitig geliert werden.

4. Verfahren nach einem der vorangegangenen Ansprüche, bei dem die Schrittabfolge a. bis c. mindestens einmal wiederholt wird, wobei bei mindestens einer der Schrittabfolgen in dem Schritt a. die Trägerbahn (1) mit den mindestens zwei PVC-Plastisolen (2, 3) gleichzeitig oder unmittelbar aufeinanderfolgend beschichtet wird.

5. Verfahren nach Anspruch 4, bei dem bei mindestens einer weiteren der Schrittabfolgen a. bis c. in dem Schritt a. die Trägerbahn (1) mit genau einem PVC-Plastisol (2, 3) beschichtet wird.

6. Verfahren nach einem der vorangegangenen Ansprüche, bei dem bei dem gleichzeitigen oder unmittelbar aufeinanderfolgenden Beschichten der Trägerbahn (1) mit mindestens zwei PVC-Plastisolen (2, 3) zwei PVC-Plastisole (2, 3) auf die Trägerbahn (1) aufgebracht werden, die sich in mindestens einer Materialeigenschaft voneinander unterscheiden, wobei sich die beiden PVC-Plastisole (2, 3) vorzugsweise in mindestens einer anderen Materialeigenschaft als ihrer Viskosität voneinander unterscheiden.

7. Verfahren nach einem der vorangegangenen Ansprüche, bei dem bei dem gleichzeitigen oder unmittelbar aufeinanderfolgenden Beschichten die mindestens zwei PVC-Plastisole (2, 3) über je einen Einzelschlitz (5) einer Mehrschichtschlitzdüse (6) mit mehreren, fluidisch voneinander getrennten Einzelschlitzen (5) auf die beschichtete oder unbeschichtete Trägerbahn (1) aufgebracht werden.

8. Verfahren nach Anspruch 7, bei dem mindestens einer der Einzelschlitze (5) von einer Pumpe (7) mit dem zugeordneten PVC-Plastisol (2, 3) beaufschlagt wird.

9. Verfahren nach Anspruch 8, das vor dem Beschichten oder während des Beschichtens das Einstellen einer Schichtdicke mindestens eines der bei dem Beschichten auf der Trägerbahn (1) aufgebrachten PVC-Plastisole (2, 3) aufweist, wozu eine Förderleistung der Pumpe (7), vorzugsweise eine Drehzahl der Pumpe (7), und/oder eine Vorschubgeschwindigkeit der Trägerbahn (1) in Bezug auf die Mehrschichtschlitzdüse (6) eingestellt wird.

10. Verfahren nach Anspruch 8 oder 9, bei dem eine Förderleistung der Pumpe (7) in Abhängigkeit einer Vorschubgeschwindigkeit der Trägerbahn (1) in Bezug auf die Mehrschichtschlitzdüse (6) und/oder in Abhängigkeit einer Breite der Mehrschichtschlitzdüse (6) senkrecht zur Vorschubrichtung der Trägerbahn (1) eingestellt wird.

11. Vorrichtung, vorzugsweise Transferbeschichtungsanlage, für die Herstellung eines mehrschichtigen PVC-Halbzeugs(100), insbesondere eines mehrschichtigen PVC-Kunstleders oder einer mehrschichtigen PVC-Schaumfolie, wobei die Vorrichtung mindestens eine Prozessstufenabfolge mit einer Beschichtungseinheit (200) für das Beschichten einer beschichteten oder unbeschichteten Trägerbahn (1) mit einem PVC-Plastisol (2, 3), einer sich an die Beschichtungsseinheit (200) anschließenden Geliereinheit (300) für das Gelieren des PVC-Plastisols (2, 3) und einer sich an die Geliereinheit (300) anschließenden Abkühleinheit (400) zum Abkühlen der mit dem gelierten PVC-Plastisol (2, 3) beschichteten Trägerbahn (1), **dadurch gekennzeichnet, dass** die Beschichtungseinheit (200) für das gleichzeitige oder unmittelbar aufeinanderfolgende Beschichten der Trägerbahn (1) mit mindestens zwei PVC-Plastisolen (2, 3) übereinander eingerichtet ist.

12. Vorrichtung nach Anspruch 11, die für das gleichzeitige oder unmittelbar aufeinanderfolgende Beschichten der Trägerbahn (1) mit mindestens zwei PVC-Plastisolen (2, 3) übereinander eine Mehrschichtschlitzdüse (6) mit mindestens zwei fluidisch voneinander getrennten Einzelschlitzen (5) aufweist.

13. Vorrichtung nach Anspruch 12, bei der mindestens einer der Einzelschlitze (5) eine einstellbare Schlitzbreite aufweist, wobei vorzugsweise die Schlitzbreiten beider Einzelschlitze (5) unabhängig voneinander einstellbar sind.

14. Vorrichtung nach Anspruch 12 oder 13, bei der die Schlitzbereiten zwischen 50 und 1000 µm, vorzugsweise zwischen 50 und 700 µm und besonders bevorzugt zwischen 200 und 500 µm beträgt.

15. Vorrichtung nach einem der Ansprüche 11 bis 14, bei der die Viskositäten der mindestens zwei PVC-Plastisole (2, 3) zwischen 1 und 15 Pa·s, vorzugsweise zwischen 2 und 8 Pa·s und besonders bevorzugt zwischen 3 und 7 Pa·s betragen, wobei weiterhin bevorzugt die Viskosität eines ersten der beiden ungelierten PVC-Plastisole, das unterhalb eines zweiten der ungelierten PVC-Plastisole angeordnet ist, größer als die Viskosität des zweiten PVC-Plastisols ist.
